# EUROPEAN PATENT SPECIFICATION

(11) **EP 2 524 173 B1**
(45) Date of publication and mention of the grant of the patent: **13.11.2013**
(21) Application number: 11701878.8
(22) Date of filing: 11.01.2011
(51) Int. Cl.: F24H 3/00, F24F 1/00, F28D 1/02, F24F 12/00, H01M 8/06, F24F 5/00, F24D 11/02, H01M 8/04

(54) **SYSTEM FOR EXTRACTING HEAT FROM OUTSIDE AIR**
SYSTEM ZUR EXTRAKTION VON WÄRME AUS DER AUSSENLUFT
SYSTÈME POUR EXTRAIRE DE LA CHALEUR DE L'AIR EXTÉRIEUR

(30) Priority: 13.01.2010 NL 2004089
(43) Date of publication of application: 21.11.2012
(73) Proprietor: Flamco B.V., 3751 LJ Bunschoten (NL)
(72) Inventor: CNOSSEN, Jan, Henk, NL-8723 Koudum (NL); DEVLIN, Terence, Arthur, NL-7312 AP Apeldoorn (NL)
(74) Representative: Grootscholten, Johannes A.M.
(86) International application number: PCT/NL2011/050017
(87) International publication number: WO 2011/087360

(56) References cited:
- EP-A1- 0 878 668
- EP-A1- 1 967 797
- FR-A1- 2 726 636
- JP-A- 59 109 731

## Description

The present invention relates to a system for extracting or obtaining heat from outside air, for instance with or in the form of a heat pump. The system is of the type defined in the preamble of the single independent claim. The subject of the present invention is a system which enables for instance heat pumps - operating with (outside) air as heat (or cold) source - to provide the thermal energy required for converting heat (or cold). Such heat pumps extract heat (or cold) from (preferably) outside air and,converts it to heat (or cold) which can be used by the user to heat (or cool) spaces and/or hot tap water.

Such systems are generally known and have the shared drawback that sufficient outside air must always be force pumped through a heat exchanger (usually an evaporator) in order to enable collection of the heat required for the heat generating process for this evaporator part of the heat pump. A fan which causes noise nuisance is applied for this purpose.

An arrangement of such a known evaporator with fan is for this reason often placed outside a building or space. The placing of such a system outside a building or space almost always has an adverse effect on the aesthetics, or more generally the appearance, of this building or this space. Furthermore, even though the noise nuisance is then moved outside the building or the space, it can thus still cause annoyance in the vicinity.

From FR-2.726.636 a radiator is known, which exhibits some features of the appended independent claim, to heat inside air.

The invention has for its object to be able to avoid a conventionally required, heavy fan causing noise nuisance for the purpose of air displacement. It is not precluded that a small, quieter fan can be applied if desired. For this purpose the invention is distinguished from the known systems by the assembly of features as defined in combination in the appended independent claim.

The necessary air feed through the channel can thus be provided wholly or at least to a considerable extent on the basis of the operation of the heat exchanger when it is placed in the descent pipe; cold air does after all tend to sink and so pushes the airflow downward through the descent pipe. Applying a large, heavy fan causing noise nuisance can hereby be avoided. The channel of the system can be placed inside the building or even form an integral part thereof, or be arranged outside along the outer wall, without generating disturbing noise or raising aesthetic objections. The channel can extend over different floors of a building or be limited in vertical length to the height available in a technical area. A suitable mean can be chosen here between the effectiveness and the efficiency of the system relative to the aesthetic impact of arranging or providing such a channel, and whether this channel can therefore be arranged outside the outer wall. The channel can extend partly inside and partly outside the building or the space.

In addition or as alternative to these kinds of possibility within the scope of the invention as according to the definition thereof in the single independent claim, the dependent claims relate to further preferred embodiments.

A system according to the invention can thus further have the feature that a heater is provided which is substantially associated with the ascent pipe. The effectiveness can thus be increased in order to enhance still further the throughfeed of air in the channel. Warm air does after all tend to rise and so pushes the airflow upward through the ascent pipe.

A system with a heater according to the invention can thus have the further feature that the ascent pipe and the descent pipe both extend substantially upward from the connecting pipe, and the heater is substantially associated with at least one of the ascent pipe and the connecting pipe. In another embodiment, with or without a heater, a system according to the invention can have the feature that the ascent pipe and the descent pipe both extend substantially downward from the connecting pipe, and the heat exchanger is substantially associated with at least one of the descent pipe and the connecting pipe. In such embodiments either the heat exchanger or the heater (if present) can already begin in the connecting pipe to act on the airflow, which then flows further to the other of the descent pipe and the ascent pipe. The connecting pipe can thus be deemed a turning point in the flow direction of the airflow through the descent pipe and the ascent pipe, and at least the heat exchanger and also - if present - the heater can already begin to have an effect on the flow at or in this turning point in order to increase it.

In another embodiment, with or without a heater, a system according to the invention can have the feature that a heat pump is connected to the heat exchanger. A low-noise or even noise-free thermal supply can thus be realized for the heat pump to thereby in order to enable effecting of the function thereof.

In another embodiment, with or without a heater, a system according to the invention can have the feature that a storage tank is associated with the heat exchanger and the heat pump. A buffer supply can thus be established, for instance to supply a central heating system or a floor heating therewith when the system according to the invention is temporarily not functioning or functioning less well.

In another embodiment with a heater a system according to the invention can have the feature that the heater is associated with at least a considerable part of a length of the ascent pipe. The temperature of the airflow can thus be increased over the whole length of the ascent pipe in order to thereby also increase the speed at which the airflow rises through the ascent pipe and further increase the efficiency of the system. It is preferably possible here for the heater to be associated with substantially the whole length of the ascent pipe. Optimization of the increase in the flow speed of the airflow through the ascent pipe can thus be realized, provided this is warranted on the basis of energy considerations in the light of the power consumed by the heater and the origin thereof.

In another embodiment, with or without a heater, a system according to the invention can have the feature that the heat exchanger is associated with at least a considerable part of a length of the descent pipe. Similar considerations as above for the heater at the ascent pipe also apply here in respect of increasing the speed at which the airflow descends through the descent pipe. It can then also be recommended for the heat exchanger to be associated with substantially the whole length of the descent pipe in order to optimize the speed.

In another embodiment, with or without a heater, a system according to the invention can have the feature that the heater is at least one of the elements or components from the group comprising: fuel cells, electric heating elements and so on. Such emission-free heaters are recommended.

With a heater in the form of a fuel cell it can be recommended here for a gas container to be provided for containing a buffer supply of gas required by the fuel cell. Continuous functioning can thus be ensured, even if gas supply is (temporarily) interrupted.

Additionally or alternatively the system can then further comprise an electrolysis unit for providing the fuel cell with hydrogen and/or oxygen gas required thereby. The requirements of the fuel cell can thus be provided locally.

In another embodiment, with or without a heater, a system according to the invention can have the feature of a solar collector for generating electric power required by the system from solar energy. This power can be utilized for (a selection of) components of the system or associated elements/components such as the heat pump, the heater, the electrolysis unit etc.

In another embodiment, with or without a heater, a system according to the invention can have the feature of a heat exchanger connected to the feed and the discharge for recovering heat from discharge air. It is thus made possible to recover heat from the airflow leaving the system at the discharge and so further increase the efficiency of the system.

An embodiment of the present invention will be described hereinbelow by way of example and not by way of limitation, with reference to the accompanying figures, in which the same or similar parts, components and aspects are designated with the same reference numerals, and in which:

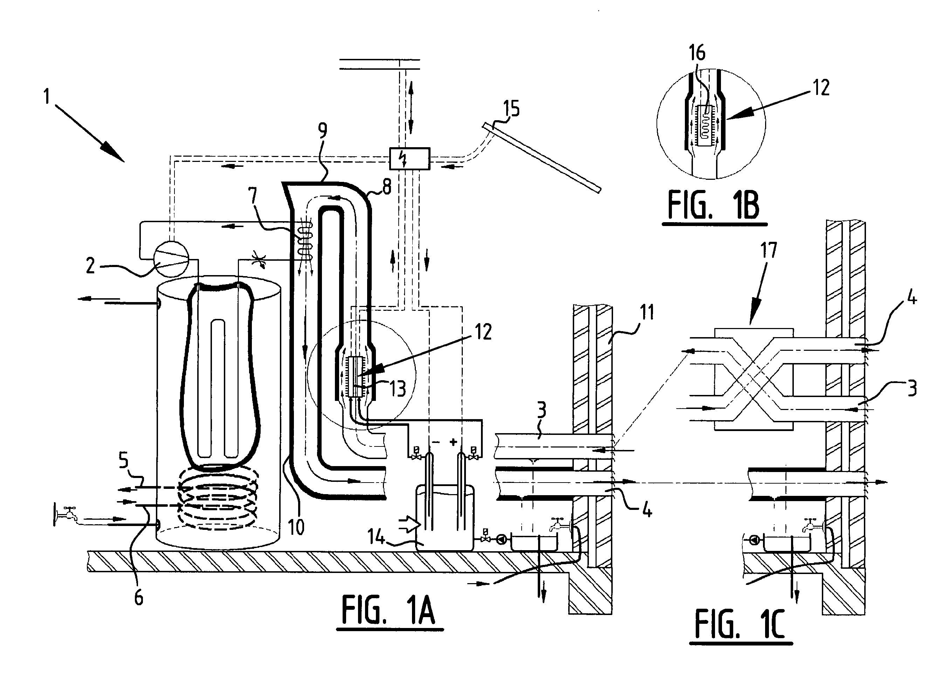

Figure 1A shows a schematic overview of a system according to the invention;
Figure 1B shows an alternative for a part of the system in figure 1A; and
Figure 1C shows an alternative for a different part of the system in figure 1A than in figure 1B.

The idea for this invention relates to a system 1 which makes it possible for heat pumps 2 - operating with air, preferably outside air, as heat (or cold) source - to produce the thermal energy required to convert heat (or cold) in extremely quiet manner, i.e. without heavy, noisy fans.

This type of heat pump 2 extracts heat (or cold) from (preferably) outside air via a feed 3 and converts it to heat (or cold) which can be used by the user to heat (or cool) spaces via feed conduit 5 and return conduit 6 and/or of hot tap water.

A problem in this type of heat pump 2 is that there must always be a forced flow of sufficient outside air through a heat exchanger (evaporator) 7 to enable collection of the heat required for the heat-generating process for heat exchanger 7 of heat pump 2.

A fan has usually been used for this purpose in the past and this causes noise nuisance.

With the intended invention a fan for air displacement is unnecessary (a small, quieter fan can however be applied if desired).

The system according to the invention in the embodiment shown in figure 1 comprises an ascent pipe 8, a connecting pipe 9 and a descent pipe 10, which together form a channel. Ascent pipe 8 and descent pipe 10 extend in vertical direction over the greatest possible height (usually limited by the height available in a (technical) area in which the system is arranged). The system can also be arranged in, against or outside an outer wall of a building and so not be limited in height to the space available in a technical area.

In descent pipe 10, which forms a cooling part of the channel, air is cooled by the heat exchanger 7 of heat pump 2 mounted in, on or round this pipe in order to form an evaporator part thereof. An air circulation (airflow in downward direction) through descent pipe 8 is hereby initiated. Heat exchanger 7 of heat pump 2 can extend over the whole length of descent pipe 8 of the channel.

When the channel is mounted for aesthetic reasons in a building or space, feed 3 and discharge 4 are situated in outer wall 11, preferably placed close together in the same outer wall surface, so that differences in air pressure caused for instance by wind are minimized.

In the same manner as at or in descent pipe 8, the air circulation process in ascent pipe 10 of the channel can also be additionally stimulated by heating air using a heater 12 - placed for this purpose in sequence before the cooling part.

The open outer ends of the channel, which takes the form of a U-shaped pipe, form feed 3 and discharge 4, and are directly connected to the outside air.

A heater 12 in ascent pipe 8 of the channel can be formed by or consist of a fuel cell 12. The heat released during the reaction between oxygen and hydrogen is here relinquished directly into the air channel.

Instead of a fuel cell 13 it is also possible to use other heaters, such as an electric heating element 16 as shown in figure 1B. Any random heater for generating heat is in fact suitable for this purpose, although it is noted that embodiments which contribute toward a low emission are recommended.

It is also possible to arrange more than one heater 12 (of the same or different types) in the ascent pipe of the channel. The whole length of the ascent part of the channel can also be utilized here for the arrangement of heaters 12.

Heating the air in ascent pipe 8 of the channel causes the airflow to rise. New, cooler outside air is hereby drawn in from outside via feed 3.

It can be said that there is an airflow in the channel because, beyond the highest point formed by connecting pipe 9, an opposite effect caused by heat exchanger 7 associated with heat pump 2 takes place in descent pipe 10 of the channel.

Heat exchanger 7 in the form of an evaporator for heat pump 2 is arranged in descent pipe 10 of the channel. The heat previously heated in ascent pipe 8 is cooled in descent pipe 10 to a temperature lower than that of the outside air.

Fuel cell 13 shown in figure 1A is provided with hydrogen or oxygen by an electrolysis unit 14. An aqueous conductive solution (salt or acid) is present in this electrolysis unit 14. The electricity required for the electrolysis preferably comes from a photovoltaic (PV) solar panel 15. It is possible to establish a gas supply, whereby solar cell 13 can be supplied at times when no sunlight is available. A buffer tank (not shown) can be utilized for this purpose.

There can also be a direct power supply from a PV solar panel 15 to electric heater 16 in figure 1B in, on or at ascent pipe 8 of the channel. The electricity generated by solar panel 15 is available to heat pump 2 or other parts of the system, but can also be delivered to the GRID (public supply network).

In another embodiment the outside air can first also be heated in a heat exchanger as is applied in a heat-recovery system for ventilation air. This embodiment is shown in figure 1C.

After examination of the foregoing description of a possible embodiment with reference to the accompanying figures, to which the invention is by no means limited, many alternative and additional embodiments will occur to the skilled person, which must all be deemed as embodiments of the invention to the extent these variants comply with the definitions in the claims, either literally or in that the same objectives are sought after therein with the same or similar means. The figures thus do not show that the channel can also be embodied in a reverse position. Feed 3 and discharge 4 of the channel are then situated for instance in a construction of a roof of a building, here also preferably placed close together in the same roof surface so that differences in air pressure caused for instance by wind are minimized. The ascent pipe and the descent pipe of the channel are then in reverse order:
- in descent pipe 10 of the channel the outside air is cooled by heat exchanger 7 of heat pump 2, whereby the airflow is set into motion in downward direction through descent pipe 10 to connecting pipe 9, and
- the previously cooled air is heated in ascent pipe 8 of the channel by an above described fuel cell 13 and/or electric heating element 16 or the like, whereby the airflow in upward direction through ascent pipe 8 is stimulated.

The channel of the system according to the invention can be incorporated in an outer wall in order to realize a greater height thereof than is available in a technical area. This can of course be taken into account during the design and construction of a building, or can be realized during renovation of at least the outer wall of an existing building.

## Claims

1. System for extracting heat from outside air, comprising:
- a feed (3) connecting to the outside air;
- a heat exchanger (7) connected to the feed;
- a discharge (4) connecting to the heat exchanger and outside air;
- a channel connecting the feed, the heat exchanger and the discharge and comprising an upright ascent pipe (8), an upright descent pipe (10) and a connecting pipe (9) between the ascent pipe and the descent pipe; and
- an impeller (12) associated with the channel for providing a volume flow of air sufficient for the heat exchanger (7) via the feed and along or through the heat exchanger, wherein
- the feed (3) and the discharge (4) are connected to outside air; and
- the heat exchanger is associated with the descent pipe and comprises an evaporator (7) connected to a heat pump (2), wherein the evaporator (7) is arranged to cool air in the descent pipe (10) and increase a downward air flow through the descent pipe (10).

2. System as claimed in claim 1, wherein a heater is provided which is substantially associated with the ascent pipe, wherein the heater is arranged to heat air in the ascent pipe (8) and thus increase a upward air flow through the ascent pipe (10).

3. System as claimed in claim 1 or 2, wherein the ascent pipe (8) and the descent pipe (10) both extend substantially upward from the connecting pipe (9), and the heater (12) is substantially associated with at least one of the ascent pipe and the connecting pipe.

4. System as claimed in claim 1, 2 or 3, wherein the ascent pipe (8) and the descent pipe (10) both extend substantially downward from the connecting pipe (9), and the heat exchanger (7) is substantially associated with at least one of the descent pipe and the connecting pipe.

5. System as claimed in at least claim 1, wherein a storage tank is associated with the heat exchanger and the heat pump.

6. System as claimed in at least claim 2, wherein the heater (12) is associated with at least a considerable part of a length of the ascent pipe (8).

7. System as claimed in claim 6, wherein the heater (12) is associated with substantially the whole length of the ascent pipe (8).

8. System as claimed in at least one of the foregoing claims, wherein the heat exchanger (7) is associated with at least a considerable part of a length of the descent pipe (10).

9. System as claimed in claim 8, wherein the heat exchanger (7) is associated with substantially the whole length of the descent pipe (10).

10. System as claimed in at least claim 2, wherein the heater (8) is at least one of the elements or components from the group comprising: fuel cells, electric heating elements or any other heater.

11. System as claimed in claim 10, with a heater (12) in the form of a fuel cell, wherein a gas container is provided for containing a buffer supply of gas required by the fuel cell.

12. System as claimed in claim 10 or 11, further comprising an electrolysis unit for providing the fuel cell with hydrogen and/or oxygen gas required thereby.

13. System as claimed in at least one of the foregoing claims, further comprising a solar collector (15) for generating electric power required by the system from solar energy.

14. System as claimed in at least one of the foregoing claims, further comprising a heat exchanger (17) connected to the feed (3) and the discharge (4) for recovering heat from discharge air.

## Patentansprüche

1. System zur Extraktion von Wärme aus der Außenluft, enthaltend:
- eine Zuführung (3), die mit der Außenluft verbunden ist;
- einen Wärmetauscher (7), der mit der Zuführung verbunden ist;
- eine Abführung (4), die mit dem Wärmetauscher und der Außenluft verbunden ist, und
- einen Kanal, der die Zuführung, den Wärmetauscher und die Abführung verbindet und ein aufrechtes ansteigendes Rohr (8), ein aufrechtes absteigendes Rohr (10) und ein Verbindungsrohr (9) zwischen dem ansteigenden und dem absteigenden Rohr aufweist; und
- eine Laufrad (12), das mit dem Kanal verbunden ist, um einen Luftstrom eines Volumens zu beschaffen, das für den Wärmetauscher (7) über die Zuführung und entlang oder durch den Wärmetauscher ausreicht,
wobei
- die Zuführung (3) und die Abführung (4) mit der Außenluft verbunden sind; und
- der Wärmetauscher mit dem abfallenden Rohr verbunden ist und einen Verdampfer (7) aufweist, der mit einer Wärmepumpe (2) verbunden ist, wobei der Verdampfer (7) angeordnet ist, um Luft in dem abfallenden Rohr (10) zu kühlen und einen abwärts gerichteten Luftstrom durch das abfallende Rohr (10) zu steigern.

2. System nach Anspruch 1, wobei eine Heizvorrichtung vorgesehen ist, die im wesentlichen mit dem ansteigenden Rohr verbunden ist, wobei die Heizvorrichtung angeordnet ist, um Luft in dem ansteigenden Rohr (8) zu erwärmen und damit einen aufwärts gerichtet Luftstrom durch das ansteigende Rohr (10) zu steigern.

3. System nach Anspruch 1 oder 2, wobei das ansteigende Rohr (8) und das absteigende Rohr (10) sich beide im wesentlichen aufwärts von dem Verbindungsrohr (9) erstrecken, und dass die Heizvorrichtung (12) im wesentlichen mit wenigstens einem von dem ansteigenden Rohr und dem Verbindungsrohr verbunden ist.

4. System nach Anspruch 1, 2 oder 3, wobei das ansteigende Rohr (8) und das absteigende Rohr (10) sich beide im wesentlichen nach unten von dem Verbindungsrohr (9) erstrecken, und das der Wärmetauscher (7) im wesentlichen mit wenigstens einem von dem absteigenden Rohr und dem Verbindungsrohr verbunden ist.

5. System wenigstens nach Anspruch 1, wobei ein Speichertank mit dem Wärmetauscher und der Wärmepumpe verbunden ist.

6. System wenigstens nach Anspruch 2, wobei die Heizvorrichtung (12) wenigstens mit einem beträchtlichen Teil einer Länge des ansteigenden Rohres (8) verbunden ist.

7. System nach Anspruch 6, wobei die Heizvorrichtung (12) im wesentlichen mit der gesamten Länge des ansteigenden Rohres (8) verbunden ist.

8. System nach wenigstens einem der vorhergehenden Ansprüche, wobei der Wärmetauscher (7) mit wenigstens einem beträchtlichen Teil einer Länge des absteigenden Rohres (10) verbunden ist.

9. System nach Anspruch 8 wobei der Wärmetauscher (7) im wesentlichen mit der gesamten Länge des absteigenden Rohres (10) verbunden ist.

10. System wenigstens nach Anspruch 2, wobei die Heizvorrichtung (8) wenigstens eines der Elemente oder Komponenten aus der Gruppe ist, die Brennstoffzellen, elektrische Heizelemente oder jede andere Heizvorrichtung enthält.

11. System nach Anspruch 10, mit einer Heizvorrichtung (12) in der Form einer Brennstoffzelle, wobei ein Gasbehälter vorgesehen ist, der eine Puffergasmenge enthält, die für die Brennstoffzelle benötigt wird.

12. System nach Anspruch 10 oder 11, ferner enthaltend eine Elektrolyseeinheit, um die Brennstoffzelle mit Wasserstoff und/oder Sauerstoffgas zu versorgen, das diese benötigt.

13. System nach wenigstens einem der vorhergehenden Ansprüche, ferner enthaltend einen Solarkollektor (15) zum Erzeugen von elektrischem Strom, der von dem System für Solarenergie benötigt wird.

14. System nach wenigstens einem der vorhergehenden Ansprüche, ferner enthaltend einen Wärmetauscher (17), der mit der Zuführung (3) und der Abführung (4) verbunden ist, um Wärme aus der Abführluft zu gewinnen.

## Revendications

1. Système pour extraire de la chaleur de l'air extérieur, comprenant :
- une alimentation (3) se raccordant à l'air extérieur ;
- un échangeur de chaleur (7) raccordé à l'alimentation ;
- une décharge (4) se raccordant à l'échangeur de chaleur et à l'air extérieur ;
- un canal raccordant l'alimentation, l'échangeur de chaleur et la décharge et comprenant un tuyau ascendant droit (8), un tuyau descendant droit (10) et un tuyau de raccordement (9) entre le tuyau ascendant et le tuyau descendant ; et
- un impulseur (12) associé au canal pour fournir un débit d'air volumique suffisant pour l'échangeur de chaleur (7) via l'alimentation et le long de ou à travers l'échangeur de chaleur,
dans lequel
- l'alimentation (3) et la décharge (4) sont raccordées à l'air extérieur ; et
- l'échangeur de chaleur est associé avec le tuyau descendant et comprend un évaporateur (7) raccordé à une pompe à chaleur (2), dans lequel l'évaporateur (7) est agencé pour refroidir l'air dans le tuyau descendant (10) et augmenter un écoulement d'air descendant à travers le tuyau descendant (10).

2. Système selon la revendication 1, dans lequel on prévoit un dispositif de chauffage qui est sensiblement associé avec le tuyau ascendant, dans lequel le dispositif de chauffage est agencé pour chauffer l'air dans le tuyau ascendant (8) et augmenter ainsi un écoulement d'air ascendant à travers le tuyau ascendant (10).

3. Système selon la revendication 1 ou 2, dans lequel le tuyau ascendant (8) et le tuyau descendant (10) s'étendent tous les deux sensiblement vers le haut à partir du tuyau de raccordement (9), et le dispositif de chauffage (12) est sensiblement associé avec l'un parmi le tuyau ascendant et le tuyau de raccordement.

4. Système selon la revendication 1, 2 ou 3, dans lequel le tuyau ascendant (8) et le tuyau descendant (10) s'étendent tous les deux sensiblement vers le bas à partir du tuyau de raccordement (9), et l'échangeur de chaleur (7) est sensiblement associé avec au moins l'un parmi le tuyau descendant et le tuyau de raccordement.

5. Système selon la revendication 1, dans lequel un réservoir de stockage est associé à l'échangeur de chaleur et la pompe à chaleur.

6. Système selon la revendication 2, dans lequel le dispositif de chauffage (12) est associé avec au moins une partie considérable d'une longueur du tuyau ascendant (8).

7. Système selon la revendication 6, dans lequel le dispositif de chauffage (12) est associé sensiblement avec toute la longueur du tuyau ascendant (8).

8. Système selon au moins l'une des revendications précédentes, dans lequel l'échangeur de chaleur (7) est associé avec au moins une partie considérable d'une longueur du tuyau descendant (10).

9. Système selon la revendication 8, dans lequel l'échangeur de chaleur (7) est associé sensiblement avec toute la longueur du tuyau descendant (10).

10. Système selon la revendication 2, dans lequel le dispositif de chauffage (8) est au moins l'un parmi les éléments ou les composants du groupe comprenant : les piles à combustible, les éléments de chauffage électrique ou n'importe quel autre dispositif de chauffage.

11. Système selon la revendication 10, avec un dispositif de chauffage (12) qui se présente sous la forme d'une pile à combustible, dans lequel un récipient de gaz est prévu pour contenir une alimentation tampon de gaz requise par la pile à combustible.

12. Système selon la revendication 10 ou 11, comprenant en outre une unité d'électrolyse pour alimenter la pile à combustible avec de l'hydrogène et/ou de l'azote.

13. Système selon au moins l'une des revendications précédentes, comprenant en outre un capteur solaire (15) pour générer l'alimentation électrique requise par le système à partir de l'énergie solaire.

14. Système selon au moins l'une des revendications précédentes, comprenant en outre un échangeur de chaleur (17) raccordé à l'alimentation (3) et à la décharge (4) pour récupérer de la chaleur de l'air de décharge.
